# EUROPEAN PATENT SPECIFICATION

(11) **EP 1 976 249 B1**
(45) Date of publication and mention of the grant of the patent: **11.03.2009**
(21) Application number: 07105354.0
(22) Date of filing: 30.03.2007
(51) Int. Cl.: H04M 1/725, G06F 9/445, H04W 8/18

(54) **System and method for management of a portable electronic device**
System und Verfahren zur Verwaltung eines tragbaren elektronischen Gerätes
Système et procédé pour la gestion d'un dispositif électronique portable

(43) Date of publication of application: 01.10.2008
(73) Proprietor: Research In Motion Limited, Waterloo, Ontario N2L 3W8 (CA)
(72) Inventor: Clark, David, Kitchener Ontario N2C 2L1 (CA); Little, Herb, Waterloo Ontario N2T 2V8 (CA)
(74) Representative: Rickard, David John

(56) References cited:
- EP-A- 1 465 039
- EP-A- 1 569 410
- WO-A-01/33867
- US-A1- 2002 131 404

## Description

The present disclosure relates generally to telecommunications and more particularly relates to a system and method for management of a portable electronic device.

Computing technology and networking technology have combined to produce extremely powerful means for telecommunication. However, further advances are to be expected and welcomed.

Portable electronic devices are now commonplace and increasing in sophistication and function. Portable electronic devices frequently combine the functionality of traditional cellular telephones, wireless personal digital assistants, handheld computers, wireless paging devices, media players, cameras and the like.

As portable electronic devices incorporate more powerful hardware, it is becoming possible to drastically increase functionality by simply installing upgrades to the computer's software and/or firmware. Since most portable electronic devices are also wirelessly networked, such upgrades can be effected over those wireless interfaces.

Portable electronic devices are also used as enterprise tools, whereby a business will provide portable electronic devices to each of its employees in order to allow those employees to communicate via the text and voice services offered by the portable electronic device. In the enterprise context, the information technology group of the enterprise will often be responsible for maintaining and servicing the portable electronic devices. Such maintenance and servicing functions will usually include the management of upgrades.

However, the wireless carrier to which the enterprise subscribes will also have the capacity to offer maintenance and service for the portable electronic devices, including the management of upgrades. Unfortunately the carrier's maintenance and service program may conflict with the enterprise's maintenance and service program, creating problems for the enterprise.

EP-A-1465039 discloses a content delivery method and system in which a mobile device is configured to activate Java-AP software according to the contents of a security descriptive file (SDF). The SDF is administered by and is received at the mobile device from an administering server unit maintained by a trustworthy organization. The mobile device is permitted to access and activate Java-AP software maintained in an IP server only if this is in accordance with authorizations in the policy information contained in the SDF.

WO 01/33867 discloses a method whereby the user of a mobile device can initiate a download of the application so that the application can be installed onto the mobile communication device. The application is downloaded through a system entry proxy server which authenticates the applications, then re-certifies it with a compact certificate including an operator defined security policy. In this way the operator can control which resources of the mobile communication device are accessed by all applications coming into the wireless domain.

### GENERAL

An aspect of this disclosure may provide a portable electronic device ("PED") comprising a microcomputer comprising a processor and a persistent storage device; a communication interface suitable for connecting said microcomputer to an administrative server and a carrier administrator server via a telecommunication link; said processor configured to receive an upgrade policy from an administrative server through said communication interface and to maintain said upgrade policy in said persistent storage device; said processor configured to determine whether a received software upgrade request complies with said maintained upgrade policy; and said processor configured to communicate with a carrier administrator server through said communication interface to complete said request if said software upgrade request does comply with said maintained upgrade policy.

The policy can define whether the carrier administrator server is permitted to instruct the microcomputer to install upgrades.

The policy can define whether the portable electronic device is permitted to request whether or not upgrades are available for the portable electronic device.

The policy can define whether the portable electronic device is permitted to request upgrades to the microcomputer from the carrier administrator server.

The policy can define whether the enterprise administrative server is permitted to instruct the microcomputer to install upgrades. The policy can further define whether the portable electronic device is permitted to request whether or not upgrades are available for the portable electronic device.

The policy can define whether the portable electronic device is permitted to request upgrades to the microcomputer from the enterprise administrative server.

The upgrade can be at least one of: a new software application, a new firmware application, an operating system upgrade, a software application upgrade, and a data file.

Another aspect of the disclosure may provide a method of managing upgrades to a portable electronic device comprising: receiving a software upgrade request at said portable electronic device; determining whether said software upgrade request complies with an upgrade policy; said upgrade policy defined by an administrative server connectable to said portable electronic device; denying said request if said software upgrade request does not comply with said upgrade policy; and, completing said request via a carrier administrator server if said software upgrade request does comply with said upgrade policy.

Another aspect of the disclosure may provide a computer readable medium storing a plurality of programming instructions that are readable and executable on a portable electronic device; said programming instructions causing said portable electronic device; to implement the steps of the method set out above.

Another aspect of the disclosure may provide a system for management of a portable electronic device comprising: a portable electronic device configured to maintain a policy; a carrier administrator server connected to said portable electronic device via a telecommunication link; said carrier administrator server configured to respond to a software upgrade request according to said policy; and, an administrative server connected to said portable electronic device and carrier administrator server via a telecommunication link configured to define said policy; said policy indicating whether said carrier administrator server is permitted to respond to said software upgrade request.

Other aspects of the disclosure may provide a carrier administrator server or an enterprise administrative server configured for use in the system.

### BRIEF DESCRIPTION OF THE DRAWINGS

Figure 1 shows is a schematic representation of a system for management of a portable electronic device.

Figure 2 shows the system of Figure 1 according to a specific implementation.

Figure 3 shows a flowchart depicting a method of managing a PED in accordance with another embodiment.

Figure 4 shows the system of Figure 2 during exemplary performance of the method of Figure 3.

Figure 5 shows the system of Figure 2 during exemplary performance of the method of Figure 3.

Figure 6 shows a flowchart depicting a method of managing a PED in accordance with another embodiment.

Figure 7 shows an exemplary block diagram hardware configuration for the PED in Figure 1.

### DESCRIPTION OF PREFERRED EMBODIMENTS

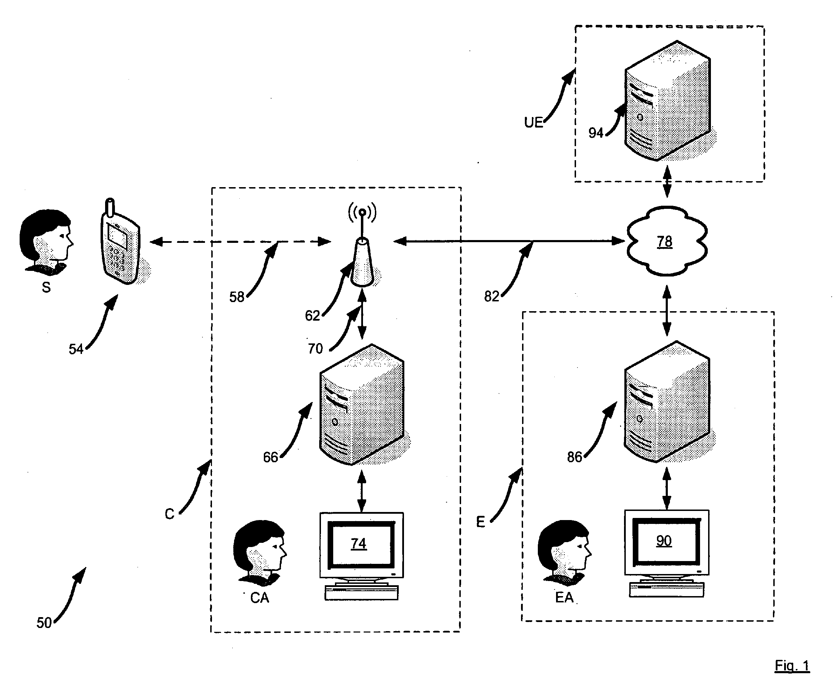

Referring now to Figure 1, a system for management of a portable electronic device is indicated generally at 50. System 50 comprises at least one portable electronic device ("PED") 54 that is operated by a subscriber S. PED 54 has a wireless interface and is therefore able to communicate via a wireless link 58. Link 58 can be based on any known type of wireless access link, or cominations thereof, including, by way of non-limiting example, Code Division Multiple Access ("CDMA"), the Global System for Mobile communications ("GSM"), WiMax, 802.11 g and its variants, Bluetooth and the like. Indeed, the set of links interconnecting the various components need not be particularly limited.

At the end of link 58 opposite to PED 54 is a wireless base station 62 that is operated by a carrier C. Carrier C also operates at least one carrier administrator server 66 that connects to base station 62 via a backhaul 70. A terminal 74 is connected to server 66 in order to allow a carrier administrator CA to interact with server 66. Carrier C is typically the carrier with whom subscriber S directly contracts for wireless services, as opposed to a roaming carrier that has infrastructure that subscriber S can utilize due to a relationship between carrier C and that roaming carrier.

Base station 66 is also connected to a network 78, such as the Internet, via a backhaul 82. In turn, an enterprise administrative server 86 that is operated by an enterprise E is connected to network 78. A terminal 90 is connected to server 86 in order to allow an enterprise administrator EA to interact with server 86. In the present embodiment, PED 54 is associated with enterprise E in such a manner that enterprise administrative server 86 is configured to perform administrative functions on behalf of PED 54.

Likewise, an upgrade server 94, operated by an upgrade entity UE, is also connected to network 78. Upgrade server 94 is configured to host upgrades that may be available for PED 54. As used herein, the term "upgrade" refers to any type of new and/or different software and/or firmware that can be installed on a portable electronic device. For example, assume PED 54 is using version 1.0 of an operating system that is configured for the hardware of PED 54. Also assume that version 1.1 of that operating system has been released. In this example, upgrade server 94 can host version 1.1 for download to PED 54, subject to the other operational conditions of system 50 which will be explained further herein. In this example, upgrade entity UE can be the same entity that originally manufactured and/or designed PED 54. It should also be clear that an upgrade can refer to a new software or firmware object (e.g. application, firmware, data file) altogether, and need not be limited to replacing existing software objects with more recent one.

Carrier administrator server 66 is configured to perform a variety of device management and administrative functions on behalf of carrier C in relation to PED 54. At least one of those administrative functions includes the management of upgrades to PED 54. More specifically, carrier administrator CA using terminal 74 can interact with server 66, to become aware of upgrades for PED 74 that are available from server 94. Having become aware of such upgrades, and subject to the other conditions of system 50 which will be discussed further below, carrier administrator CA can elect to make upgrades on server 94 available to subscriber S for download and installation onto PED 54. Also subject to the other conditions of system 50, server 66 can be configured to be responsive to queries from PED 54 as to whether upgrades are available. Also subject to the other conditions of system 50, server 66 can be configured to instruct PED 54 to install upgrades, forcing them to be installed on PED 54, and/or to only install upgrades subject to explicit requests for upgrade installation on PED 54.

Enterprise administrative server 86 is also configured to perform a variety of device management and administrative functions on behalf of carrier C in relation to PED 54. One or more of those functions can overlap with the functions of carrier administrator server 66. Typically, however, at least some of the functions in carrier administrator server 66 and enterprise administrative server 86 are different. However, at least one of the administrative functions of server 86 also includes the management of upgrades to PED 54. More specifically, enterprise administrator EA using terminal 90 can interact with server 86, to become aware of upgrades for PED 54 that are available from server 94. Having become aware of such upgrades, and subject to the other conditions of system 50 which will be discussed further below, enterprise administrator EA can elect to make upgrades on server 94 available to subscriber S for download and installation onto PED 54. Also subject to the other conditions of system 50, server 86 can be configured to be responsive to queries from PED 54 as to whether upgrades are available. Also subject to the other conditions of system 50, server 86 can be configured to instruct PED 54 to install upgrades, forcing them to be installed on PED 54, and/or to only install upgrades subject to explicit requests for upgrade installation on PED 54. Also subject to the other conditions of system 50, server 86 can be configured to completely or partially override and or otherwise control the ability for server 66 to perform upgrade functions for PED 54 as previously described in relation to carrier administrative server 66.

Those skilled in the art will now recognize that system 50 can have applicability to PEDs such as the Blackberr^{™} line of PEDs from Research In Motion Inc. of Waterloo, Ontario Canada. For example, where PED 54 is a Blackberry^{™}, then server 86 can be a Blackberry Enterprise Server ("BES") from Research In Motion Inc. that is operated by (or available to and used by) enterprise E. In this example, subscriber S may be an employee of enterprise E. Likewise, upgrade entity UE itself can be Research in Motion Inc., and upgrade server 94 can be a server operated by Research In Motion Inc. Likewise, carrier C can be any wireless carrier, (e.g. Verizon, AT&T, Sprint, Orange) and server 66 can be any type of Operations, Administration, Maintenance, and Provisioning ("OAMP") that is operated by (or available to and used by) a carrier C. However, the teachings herein are not limited to Blackberry^{™} implementations and can also be applicable to other systems that bear the same basic structure as system 50, such as, by way of non-limiting example those systems offered by Motorola Good Technology Group 4250 Burton Drive, Santa Clara, CA 95054.

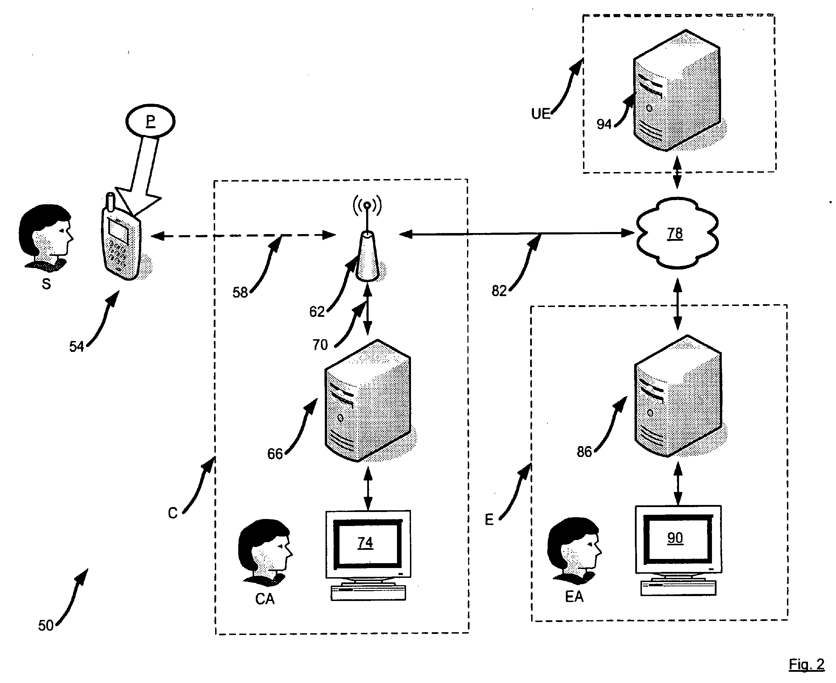

In a specific embodiment, shown in Figure 2, PED 54 maintains a policy P which is stored in a storage device within PED 54. Figure 2 is exemplary because the actual location of storage of policy P can be varied. Such a persistent storage device can be based on any hardware storage technology, such as Electrically Erasable Programmable Read Only Memory ("EEPROM") or flash memory or the like. Policy P can include any number of rights, privileges, security controls and the like. In a present embodiment, policy P includes at least the privileges associated with how upgrades are made available and/or delivered to PED 54. Table I shows a *purely exemplary* set of fields that can be used to implement policy P.

**Table I**

| **Exemplary structure and contents of Policy P** | | |
|---|---|---|
| Field Number | Field Description | Exemplary Field Contents |
| 1 | Can Carrier instruct PED to install upgrades? | No |
| 2 | Can Enterprise instruct PED to install upgrades? | Yes |
| 3 | Can Subscriber query Carrier as to whether upgrades are available? | No |
| 4 | Can Subscriber "Request" upgrades from Carrier? | No |
| 5 | Can Subscriber query Enterprise as to whether upgrades are available? | Yes |
| 6 | Can Subscriber "Request" upgrades from Enterprise? | Yes |

Explaining Table I in greater detail, Field 1 can be set to "Yes" or "No" to indicate whether carrier C can use server 66 to to instruct PED 54 to install upgrades available on server 94, and thereby automatically force PED 54 to install and begin operating using that upgrade. Field 2 can be set to "Yes" or "No" to indicate whether enterprise E can use server 86 to to instruct PED 54 to install upgrades available on server 94, and thereby automatically force PED 54 to install and begin operating using that upgrade. Field 3 can be set to "Yes" or "No" to indicate whether subscriber S can use PED 64 to send a query to server 66 as to whether any upgrades available on server 94 are available. Field 4 can be set to "Yes" or "No" to indicate whether subscriber S can use PED 54 to actually request a download of an available upgrade of an upgrade from carrier C via server 66. Field 5 can be set to "Yes" or "No" to indicate whether subscriber S can use PED 54 to send a query to server 86 as to whether any upgrades available on server 94 are available. Field 6 can be set to "Yes" or "No" to indicate whether subscriber S can use PED 54 to actually request a download of an available upgrade of an upgrade from carrier C via server 86.

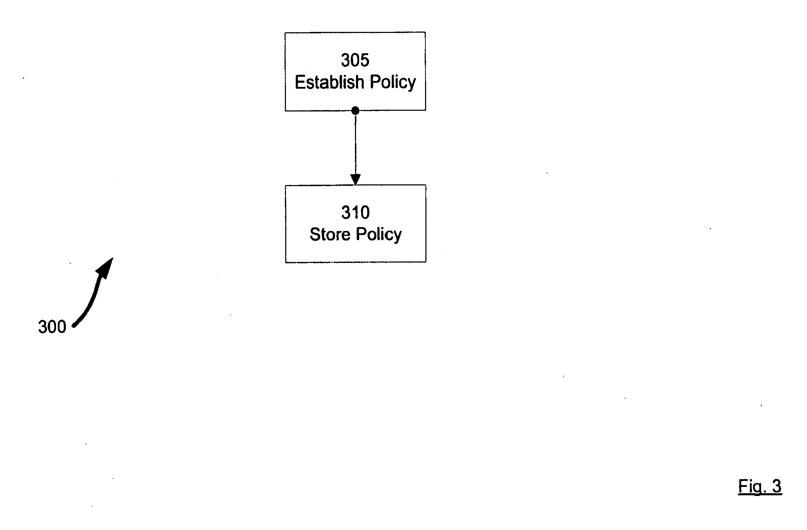

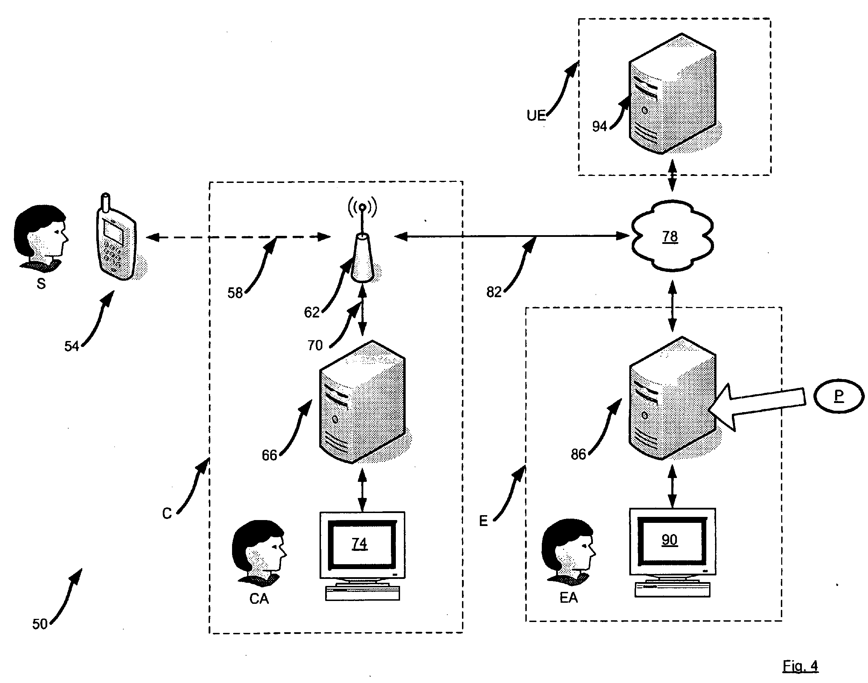

Referring now to Figure 3, a method for managing a portable electronic device is depicted in the form of a flow chart and indicated generally at 300. For the purposes of helping to further explain system 50 and method 300, method 300 will be explained in terms of its performance on system 50. It should be understood however, that system 50 and method 300 can be varied and that method 300 can be performed on different configurations of systems. Beginning first at step 305, a policy is established. Exemplary performance of step 305 is represented in Figure 4, whereby enterprise administrator EA will use appropriate user-interfaces on terminal 90 to interact with server 86 so as to define policy P. As previously mentioned, policy P can have different structures, but in the present example it will be assumed that policy P is configured according to Table I.

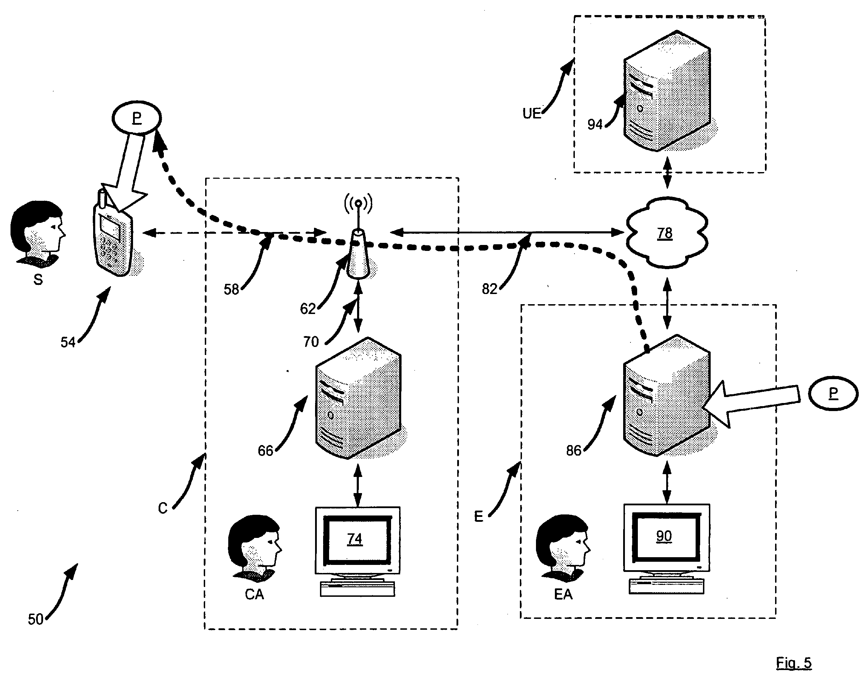

Next, at step 310, the policy is stored. Exemplary performance of step 310 is represented in Figure 5, whereby enterprise administrator EA will use appropriate user-interfaces on terminal 90 to then cause policy P, as defined at step 305, to be carried via network 78 and base station 62 for storage on PED 54.

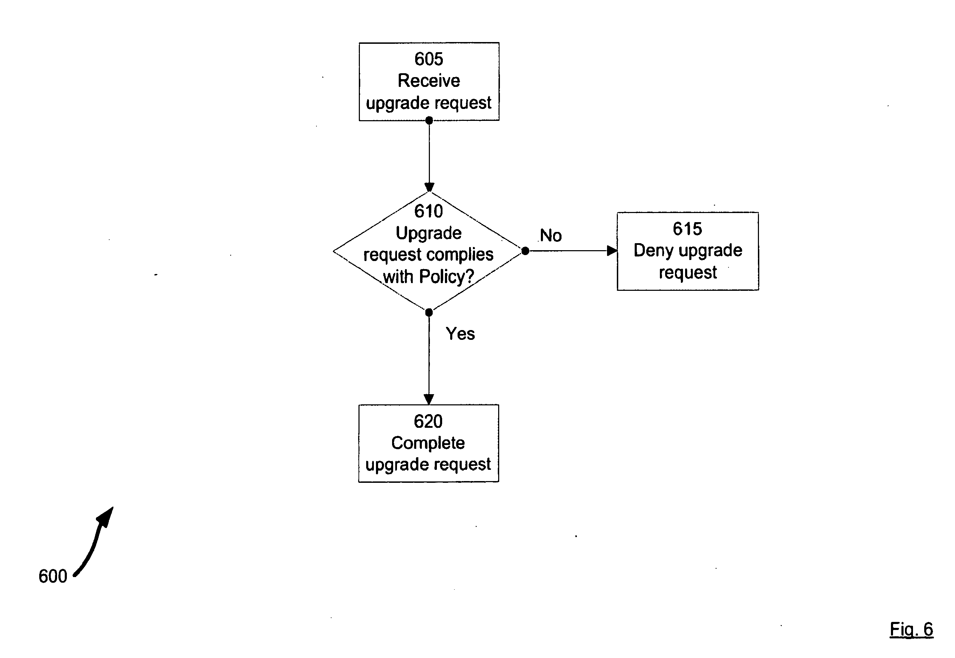

Referring now to Figure 6, another method for managing a portable electronic device is depicted in the form of a flow chart and indicated generally at 600. For the purposes of helping to further explain system 50 and method 600, method 600 will be explained in terms of its performance on system 50. It should be understood however, that system 50 and method 600 can be varied and that method 600 can be performed on different configurations of systems. Method 600 can be performed in various ways and different exemplary performances of method 600 will now be provided to illustrate certain of those ways.

As a first example, beginning first at step 605, an upgrade request is received. As an example of performance of step 605, assume subscriber S requests that the carrier C provide information as to whether any upgrades are available. At step 610, a determination is made as to whether the request complies with the policy. Since Field 3 of Table I indicates, according to policy P, that subscriber S is not permitted to make such a request, then method 600 will advance to step 615 and the request will be denied-PED 54 will simply refuse the request and so indicate to subscriber S that such a request is not permitted.

As another example of performance of method 600, assume at step 605 that subscriber S requests that the enterprise E provide information as to whether any upgrades are available. At step 610, a determination is made as to whether the request complies with the policy. Since Field 5 of Table I indicates, according to policy P, that subscriber S is permitted to make such a request, then method 600 will advance to step 620 and the request will be processed - PED 54 will send a query to server 86 via base station 62 and network 78 querying as to whether any upgrades for PED 54 are available. In turn, server 86 will reply to PED 54 with a response indicating whether any upgrades are available.

As another example of performance of method 600, assume at step 605 that carrier administrator CA instructs PED 54 to install an upgrade available on server 94. At step 610, a determination is made as to whether the request complies with the policy. Since Field 1 of Table I indicates, according to policy P, that carrier C is NOT permitted to make such a request, then method 600 will advance to step 615 and the request will be denied -- PED 54 will send a response back to server 66 that such an upgrade is not permitted and PED 54 will decline to actually install the upgrade.

As another example of performance of method 600, assume at step 605 that enterprise administrator EA instructs PED 54 to install an upgrade available on server 94. At step 610, a determination is made as to whether the request complies with the policy. Since Field 2 of Table I indicates, according to policy P, that enterprise E is permitted to make such a request, then method 600 will advance to step 620 and the request will be processed -- PED 54 will receive any data files that contain the upgrade and proceed to install those upgrades on PED 54.

It will now be apparent to those of skill in the art that method 600 can perform in a number of different ways according to the structure of policy P and the actual types of requests that are made, be they from subscriber S or from carrier administrator CA or from enterprise administrator EA or elsewhere.

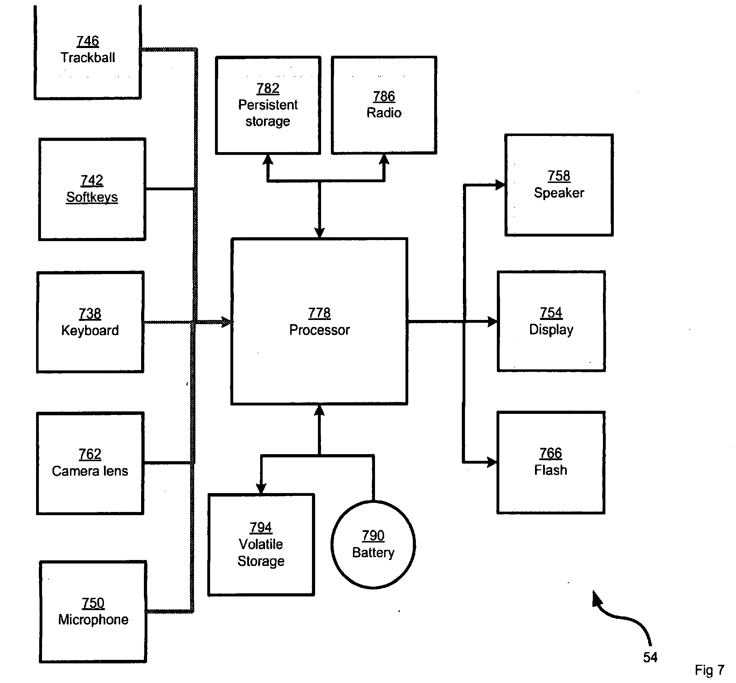

It should be reemphasized that the structure and features of PED 54 can vary. However, to provide an example, Figure 7 shows a block diagram representing exemplary components of PED 54 is shown. PED 54 thus includes a processor 778 which interconnects input devices of PED 54 (e.g. a trackball 746, soft keys 742, keyboard 738, a camera lens 762 and a microphone 750) and output devices of PED 54 (e.g. a speaker 758, a display 754 and a camera flash 766). Processor 778 is also connected to a persistent storage device 782. As discussed earlier, persistent storage device 782 can be implemented using flash memory or the like, and/or can include other programmable read only memory ("PROM") technology and/or can include read only memory ("ROM") technology and/or can include a removable "smart card" and/or can comprised combinations of the foregoing. Collectively, one can view processor 778 and persistent storage device 782 as a microcomputer.

PED 754 also includes a wireless radio 786 disposed that connects wirelessly to base station 62 to provide wireless email, telephony and web-browsing functionality of PED 54. PED 54 also includes a battery 790 which is typically rechargeable and provides power to the components of PED 54. In Figure 7, for simplicity battery 90 is only shown connected to processor 78, but it will be understood that battery 790 is connected to any component (e.g. the CCD associated lens 762, radio 788, display 754 and flash 766) within PED 54 that needs power to operate. PED 54 also includes volatile storage 794, which can be implemented as random access memory ("RAM"), which can be used to temporarily store applications and data as they are being used by processor 778.

While the foregoing describes certain exemplary embodiments, it should be understood that combinations, variations and subsets of those embodiments are contemplated. For example, it should be understood that system 50 is presented in a simplified manner and that other components can be included and/or system 50 can be varied. For example, network 50 can also include the public switched telephone network ("PSTN") and/or other type of network. Also, it should be understood that backhaul 82 and backhaul 70 can in fact be the same backhaul, and are presented separately in Figure 1 to assist in explanation. Also, in a present embodiment, upgrade entity UE, carrier C and enterprise E are all separate entities, but in other embodiments one or more of these entities can be combined. For example, the upgrade server 94 can be operated by either carrier C or enterprise E. Other variations to system 50, and/or components that can be included in system 50, will now occur to those of skill in the art.

As another example, upgrade entity UE can be an entity other than the manufacturer or designer of device 54. For example, assume PED 54 is using version 2.0 of a mapping program (e.g. Google Maps from Google Inc., 1600 Amphitheatre Parkway, Mountain View, CA 94043) that can download mapping information from network 78 and is configured for the hardware of PED 54. Also assume that version 2.1 of that mapping program has been released. In this example, upgrade server 94 can host version 2.1 of that mapping program for download to PED 54, subject to the other operational conditions of system 50 explained herein. In this example, upgrade entity UE can be the same entity that originally released version 2.0 of the mapping program.

As another example, it should be understood that in a typical installation multiple PEDs 54 would be included and be administered according to their own policy P, or according to a group policy P that is defined for every PED 54 associated with a given enterprise E.

As another example, enterprise E can be an entity other than an enterprise that employs or is otherwise affiliated with subscriber S. For example, enterprise E could be an entity that hosts data on behalf of an application that is executed on PED 54. Enterprise E could in turn, then need to control the exact version of an operating system or library or the like being stored on PED 54 in order to ensure the application stored on PED 54 could properly access the data stored at the enterprise E. In this situation, policy P could be used to enforce those needs of enterprise E.

As another example, it should be understood that a plurality of policies P can be stored on PED 54, and such policies P could belong to a plurality of different enterprises E. In this example, it would be desirable to have a master policy that ensured that the individual policies P did not conflict with each other.

As a further example, it can be desired to have security mechanisms, such as digital signatures, to ensure that a particular policy P is authorized by, for example, a given enterprise E.

## Claims

1. A method of managing software upgrades to a portable electronic device (54) comprising:
receiving a software upgrade request at said portable electronic device (54);
determining whether said software upgrade request complies with an upgrade policy; said upgrade policy defined by an administrative server (86) connectable to said portable electronic device (54);
denying said request if said software upgrade request does not comply with said upgrade policy; and,
completing said request via a carrier administrator server (66) if said software upgrade request does comply with said upgrade policy.

2. The method of claim 1 wherein said policy is maintained on said portable electronic device (54).

3. The method of claim 1 or claim 2 wherein said policy defines whether said carrier administrator server (66) is permitted to instruct said portable electronic device (54) to install software upgrades.

4. The method of any one of claims 1 to 3 wherein said policy defines whether said portable electronic device (54) is permitted to query said carrier administrator server (66) as to whether or not software upgrades are available for said portable electronic device (54).

5. The method of any one of claims 1 to 4 wherein said policy defines whether said portable electronic device (54) is permitted to request software upgrades to said portable electronic device (54).

6. The method of any one of claims 1 to 5 wherein said portable electronic device (54) is able to communicate with said administrative server (86) connected to said portable electronic device (54) via a telecommunication link (58, 82) and to receive said policy from said administrative server (86).

7. The method of claim 6 wherein said policy defines whether said administrative server (86) is permitted to instruct said portable electronic device (54) to install software upgrades.

8. The method of claim 6 or claim 7 wherein said policy defines whether said portable electronic device (54) is permitted to query said administrative server (86) as to whether or not software upgrades are available for said portable electronic device (54).

9. The method of any one of claims 6 to 8 wherein said policy defines whether said portable electronic device (54) is permitted to request upgrades to said portable electronic device (54) from said administrative server (86).

10. The method of any one of claims 1 to 9 wherein a software upgrade is any one or any combination of: a new software application, a new firmware application, an operating system upgrade, a software application upgrade, and a data file.

11. The method of any one of claims 1 to 10 wherein said portable electronic device (54) is able to verify that a digital certificate associated with said policy was issued by said administrative server (86).

12. A computer readable medium storing a plurality of programming instructions that are readable and executable on a portable electronic device (54); said programming instructions causing said portable electronic device (54) to implement the steps of the method of any one of claims 1 to 11.

13. A system (50) for management of a portable electronic device 54), comprising:
a portable electronic device (54) configured to maintain a policy;
a carrier administrator server (66) connected to said portable electronic device (54) via a telecommunication link (68, 70); said carrier administrator server (66) configured to respond to a software upgrade request according to said policy; and,
an administrative server (86) connected to said portable electronic device (54) and carrier administrator server (66) via a telecommunication link (82) configured to define said policy; said policy indicating whether said carrier administrator server (66) is permitted to respond to said software upgrade request.

14. The system (50) of claim 13 wherein said policy defines whether said carrier administrator server (66) is permitted to instruct said portable electronic device (54) to install said software upgrade.

15. The system (50) of claim 13 or 14 wherein said policy defines whether said portable electronic device (54) is permitted to request whether or not software upgrades are available for said portable electronic device (54).

16. The system (50) of any one of claims 13 to 14 wherein said policy defines whether said portable electronic device (54) is permitted to request software upgrades to said portable electronic device (50) from said carrier administrator server (66).

17. The portable electronic device (54) of any one of claims 13-16 wherein an upgrade according to said requests is any one or any combination of: a new software application, a new firmware application, an operating system upgrade, a software application upgrade, and/or a data file.

18. A carrier administrator server (66) configured for use in a system according to any one of claims 13-17.

19. An administrative server (86) configured for use in a system according to any one of claims 13-17.

20. A portable electronic device (54) comprising:
a microcomputer comprising a processor (778) and a persistent storage device (782);
a communication interface (786) suitable for connecting said microcomputer to an administrative server (86) and a carrier administrator server (66) via a telecommunication link (58);
said processor (778) configured to receive an upgrade policy from an administrative server (86) through said communication interface (786) and to maintain said upgrade policy in said persistent storage device (782),
said processor (778) configured to determine whether a received software upgrade request complies with said maintained upgrade policy; and
said processor (778) configured to communicate with a carrier administrator server (66) through said communication interface (786) to complete said request if said software upgrade request does comply with said maintained upgrade policy.

## Patentansprüche

1. Verfahren zur Verwaltung von Software-Upgrades auf einer tragbaren elektronischen Vorrichtung (54), das Folgendes umfasst:
Empfangen einer Software-Upgrade-Anfrage auf der tragbaren elektronischen Vorrichtung (54);
Ermitteln, ob die Software-Upgrade-Anfrage eine Upgrade-Richtlinie erfüllt; wobei die Upgrade-Richtlinie von einem Verwaltungsserver (86) definiert wird, der mit der tragbaren elektronischen Vorrichtung (54) verbunden werden kann;
Ablehnen der Anfrage, wenn die Software-Upgrade-Anfrage die Upgrade-Richtlinie nicht erfüllt; und
Ausführen der Anfrage über einen Trägerverwaltungsserver (66), wenn die Software-Upgrade-Anfrage die Upgrade-Richtlinie erfüllt.

2. Verfahren nach Anspruch 1, wobei die Richtlinie auf der tragbaren elektronischen Vorrichtung (54) gespeichert wird.

3. Verfahren nach Anspruch 1 oder Anspruch 2, wobei die Richtlinie bestimmt, ob dem Trägerverwaltungsserver (66) gestattet wird, die tragbare elektronische Vorrichtung (54) anzuweisen, Software-Upgrades zu installieren.

4. Verfahren nach einem der Ansprüche 1 bis 3, wobei die Richtlinie definiert, ob der tragbaren elektronischen Vorrichtung (54) gestattet wird, den Trägerverwaltungsserver (66) abzufragen, ob Software-Upgrades für die tragbare elektronische Vorrichtung (54) zur Verfügung stehen.

5. Verfahren nach einem der Ansprüche 1 bis 4, wobei die Richtlinie definiert, ob der tragbaren elektronischen Vorrichtung (54) gestattet wird, Software-Upgrades für die tragbare elektronische Vorrichtung (54) anzufordern.

6. Verfahren nach einem der Ansprüche 1 bis 5, wobei die tragbare elektronische Vorrichtung (54) mit dem Verwaltungsserver (86) kommunizieren kann, der über eine Telekommunikationsverbindung (58, 82) mit der tragbaren elektronischen Vorrichtung (54) verbunden ist, und die Richtlinie von dem Verwaltungsserver (86) empfangen kann.

7. Verfahren nach Anspruch 6, wobei die Richtlinie definiert, ob dem Verwaltungsserver (86) gestattet wird, die tragbare elektronische Vorrichtung (54) anzuweisen, Software-Upgrades zu installieren.

8. Verfahren nach Anspruch 6 oder Anspruch 7, wobei die Richtlinie definiert, ob der tragbaren elektronischen Vorrichtung (54) gestattet wird, den Verwaltungsserver (86) abzufragen, ob Software-Upgrades für die tragbare elektronische Vorrichtung (54) zur Verfügung stehen.

9. Verfahren nach einem der Ansprüche 6 bis 8, wobei die Richtlinie definiert, ob der tragbaren elektronischen Vorrichtung (54) gestattet wird, von dem Verwaltungsserver (86) Upgrades für die tragbare elektronische Vorrichtung (54) anzufordern.

10. Verfahren nach einem der Ansprüche 1 bis 9, wobei ein Software-Upgrade entweder eine neue Softwareanwendung, eine neue Firmwareanwendung, ein Betriebssystem-Upgrade, ein Softwareanwendungs-Upgrade oder eine Datendatei ist oder eine Kombination aus diesen ist.

11. Verfahren nach einem der Ansprüche 1 bis 10, wobei die tragbare elektronische Vorrichtung (54) verifizieren kann, dass ein digitales Zertifikat, das zu der Richtlinie gehört, von dem Verwaltungsserver (86) ausgegeben wurde.

12. Computerlesbares Medium zum Speichern einer Vielzahl von Programmieranweisungen, die auf einer tragbaren elektronischen Vorrichtung (54) gelesen und ausgeführt werden können; wobei die Programmieranweisungen die tragbare elektronische Vorrichtung (54) dazu veranlassen, die Schritte des Verfahrens nach einem der Ansprüche 1 bis 11 zu implementieren.

13. System (50) zur Verwaltung einer tragbaren elektronischen Vorrichtung (54), das Folgendes umfasst:
eine tragbare elektronische Vorrichtung (54), die zum Speichern einer Richtlinie konfiguriert ist;
einen Trägerverwaltungsserver (66), der über eine Telekommunikationsverbindung (68, 70) mit der tragbaren elektronischen Vorrichtung (54) verbunden ist; wobei der Trägerverwaltungsserver (66) dafür konfiguriert ist, auf eine Software-Upgrade-Anfrage gemäß der Richtlinie zu reagieren; und
einen Verwaltungsserver (86), der über eine Telekommunikationsverbindung (82) mit der tragbaren elektronischen Vorrichtung (54) und dem Trägerverwaltungsserver (66) verbunden ist, wobei der Verwaltungsserver (86) so konfiguriert ist, dass er die Richtlinie definiert; wobei die Richtlinie anzeigt, ob dem Trägerverwaltungsserver (66) gestattet ist, auf die Software-Upgrade-Anfrage zu reagieren.

14. System (50) nach Anspruch 13, wobei die Richtlinie definiert, ob dem Trägerverwaltungsserver (66) gestattet ist, die tragbare elektronische Vorrichtung (54) anzuweisen, das Software-Upgrade zu installieren.

15. System (50) nach Anspruch 13 oder 14, wobei die Richtlinie definiert, ob der tragbaren elektronischen Vorrichtung (54) gestattet ist, anzufragen, ob Software-Upgrades für die tragbare elektronische Vorrichtung (54) verfügbar sind.

16. System (50) nach einem der Ansprüche 13 bis 14, wobei die Richtlinie definiert, ob der tragbaren elektronischen Vorrichtung (54) gestattet ist, von dem Trägerverwaltungsserver (66) Software-Upgrades für die tragbare elektronische Vorrichtung (50) anzufordern.

17. Tragbare elektronische Vorrichtung (54) nach einem der Ansprüche 13-16, wobei ein Upgrade gemäß den Anfragen entweder eine neue Softwareanwendung, eine neue Firmwareanwendung, ein Betriebssystem-Upgrade, ein Softwareanwendungs-Upgrade und/oder eine Datendatei ist oder eine Kombination aus diesen ist.

18. Trägerverwaltungsserver (66), der zur Verwendung in einem System gemäß einem der Ansprüche 13-17 konfiguriert ist.

19. Verwaltungsserver (86), der zur Verwendung in einem System gemäß einem der Ansprüche 13-17 konfiguriert ist.

20. Tragbare elektronische Vorrichtung (54), die Folgendes umfasst:
einen Mikrocomputer, der einen Prozessor (778) und eine Dauerspeichervorrichtung (782) umfasst;
eine Kommunikationsschnittstelle (786), die zur Verbindung des Mikrocomputers mit einem Verwaltungsserver (86) und einem Trägerverwaltungsserver (66) über eine Telekommunikationsverbindung (58) geeignet ist;
wobei der Prozessor (778) dafür konfiguriert ist, durch die Kommunikationsschnittstelle (786) eine Upgrade-Richtlinie von einem Verwaltungsserver (86) zu empfangen und die Upgrade-Richtlinie in der Dauerspeichervorrichtung (782) zu speichern,
wobei der Prozessor (778) dafür konfiguriert ist, zu ermitteln, ob eine empfangene Software-Upgrade-Anfrage die gespeicherte Upgrade-Richtlinie erfüllt; und
wobei der Prozessor (778) dafür konfiguriert ist, durch die Kommunikationsschnittstelle (786) mit einem Trägerverwaltungsserver (66) zu kommunizieren, um die Anfrage auszuführen, wenn die Software-Upgrade-Anfrage die gespeicherte Upgrade-Richtlinie erfüllt.

## Revendications

1. Un procédé pour gérer des mises à niveau de logiciel pour un dispositif électronique portatif (54) comportant les étapes suivantes :
recevoir une demande de mise à niveau de logiciel au niveau dudit dispositif électronique portatif (54) ;
déterminer si ladite demande de mise à niveau de logiciel est conforme à une politique de mise à niveau ; ladite politique de mise à niveau étant définie par un serveur d'administration (86) pouvant être connecté audit dispositif électronique portatif (54) ;
rejeter ladite demande si ladite demande de mise à niveau de logiciel n'est pas conforme à ladite politique de mise à niveau ; et,
satisfaire ladite demande par l'intermédiaire d'un serveur administrateur opérateur (66) si ladite demande de mise à niveau de logiciel est bien conforme à ladite politique de mise à niveau.

2. Le procédé de la revendication 1, dans lequel ladite politique est tenue à jour sur ledit dispositif électronique portatif (54).

3. Le procédé de la revendication 1 ou de la revendication 2, dans lequel ladite politique définit si ledit serveur administrateur opérateur (66) a la permission de donner instruction audit dispositif électronique portatif (54) d'installer des mises à niveau de logiciel.

4. Le procédé de n'importe laquelle des revendications 1 à 3, dans lequel ladite politique définit si ledit dispositif électronique portatif (54) a la permission d'interroger ledit serveur administrateur opérateur (66) pour savoir si des mises à niveau de logiciel sont disponibles ou non pour ledit dispositif électronique portatif (54).

5. Le procédé de n'importe laquelle des revendications 1 à 4, dans lequel ladite politique définit si ledit dispositif électronique portatif (54) a la permission de demander des mises à niveau de logiciel pour ledit dispositif électronique portatif (54).

6. Le procédé de n'importe laquelle des revendications 1 à 5, dans lequel ledit dispositif électronique portatif (54) est capable de communiquer avec ledit serveur d'administration (86) connecté audit dispositif électronique portatif (54) par l'intermédiaire d'une liaison de télécommunication (58, 82) et de recevoir ladite politique dudit serveur d'administration (86).

7. Le procédé de la revendication 6, dans lequel ladite politique définit si ledit serveur d'administration (86) a la permission de donner instruction audit dispositif électronique portatif (54) d'installer des mises à niveau de logiciel.

8. Le procédé de la revendication 6 ou de la revendication 7, dans lequel ladite politique définit si ledit dispositif électronique portatif (54) a la permission d'interroger ledit serveur d'administration (86) pour savoir si des mises à niveau de logiciel sont disponibles ou non pour ledit dispositif électronique portatif (54).

9. Le procédé de n'importe laquelle des revendications 6 à 8, dans lequel ladite politique définit si ledit dispositif électronique portatif (54) a la permission de demander des mises à niveau pour ledit dispositif électronique portatif (54) audit serveur d'administration (86).

10. Le procédé de n'importe laquelle des revendications 1 à 9, dans lequel une mise à niveau de logiciel est n'importe quel élément parmi, ou n'importe quelle combinaison de : une nouvelle application logicielle, une nouvelle application micrologicielle, une mise à niveau de système d'exploitation, une mise à niveau d'application logicielle, et un fichier de données.

11. Le procédé de n'importe laquelle des revendications 1 à 10, dans lequel ledit dispositif électronique portatif (54) est capable de vérifier qu'un certificat numérique associé à ladite politique a été émis par ledit serveur d'administration (86).

12. Un support lisible par ordinateur stockant une pluralité d'instructions de programmation qui sont lisibles et exécutables sur un dispositif électronique portatif (54) ; lesdites instructions de programmation amenant ledit dispositif électronique portatif (54) à implémenter les étapes du procédé de n'importe laquelle des revendications 1 à 11.

13. Un système (50) pour la gestion d'un dispositif électronique portatif (54), comportant :
un dispositif électronique portatif (54) configuré pour tenir à jour une politique ;
un serveur administrateur opérateur (66) connecté audit dispositif électronique portatif (54) par l'intermédiaire d'une liaison de communication (68, 70) ; ledit serveur administrateur opérateur (66) étant configuré pour répondre à une demande de mise à niveau de logiciel selon ladite politique ; et,
un serveur d'administration (86) connecté audit dispositif électronique portatif (54) et audit serveur administrateur opérateur (66) par l'intermédiaire d'une liaison de télécommunication (82) configuré pour définir ladite politique ; ladite politique indiquant si ledit serveur administrateur opérateur (66) a la permission de répondre à ladite demande de mise à niveau de logiciel.

14. Le système (50) de la revendication 13, dans lequel ladite politique définit si ledit serveur administrateur opérateur (66) a la permission de donner instruction audit dispositif électronique portatif (54) d'installer ladite mise à niveau de logiciel.

15. Le système (50) de la revendication 13 ou 14, dans lequel ladite politique définit si ledit dispositif électronique portatif (54) a la permission de demander si des mises à niveau de logiciel sont disponibles ou non pour ledit dispositif électronique portatif (54).

16. Le système (50) de n'importe laquelle des revendications 13 à 14, dans lequel ladite politique définit si ledit dispositif électronique portatif (54) a la permission de demander des mises à niveau de logiciel pour ledit dispositif électronique portatif (50) audit serveur administrateur opérateur (66).

17. Le dispositif électronique portatif (54) de n'importe laquelle des revendications 13 à 16, dans lequel une mise à niveau selon lesdites demandes est n'importe quel élément parmi, ou n'importe quelle combinaison de : une nouvelle application logicielle, une nouvelle application micrologicielle, une mise à niveau de système d'exploitation, une mise à niveau d'application logicielle, et/ou un fichier de données.

18. Un serveur administrateur opérateur (66) configuré pour une utilisation dans un système selon n'importe laquelle des revendications 13 à 17.

19. Un serveur d'administration (86) configuré pour une utilisation dans un système selon n'importe laquelle des revendications 13 à 17.

20. Un dispositif électronique portatif (54) comportant :
un micro-ordinateur comportant un processeur (778) et un dispositif de stockage permanent (782) ;
une interface de communication (786) adaptée pour connecter ledit micro-ordinateur à un serveur d'administration (86) et à un serveur administrateur opérateur (66) par l'intermédiaire d'une liaison de télécommunication (58) ;
ledit processeur (778) étant configuré pour recevoir une politique de mise à niveau d'un serveur d'administration (86) par le biais de ladite interface de communication (786) et pour tenir à jour ladite politique de mise à niveau dans ledit dispositif de stockage permanent (782),
ledit processeur (778) étant configuré pour déterminer si une demande de mise à niveau de logiciel reçue est conforme à ladite politique de mise à niveau tenue à jour ; et
ledit processeur (778) étant configuré pour communiquer avec un serveur administrateur opérateur (66) par le biais de ladite interface de communication (786) afin de satisfaire ladite demande si ladite demande de mise à niveau de logiciel est bien conforme à ladite politique de mise à niveau tenue à jour.
